# EUROPEAN PATENT APPLICATION

(11) **EP 4 738 593 A1**
(43) Date of publication of application: **06.05.2026**
(21) Application number: 24853713.6
(22) Date of filing: 09.08.2024
(51) Int. Cl.: H01M 50/457

(54) **ELECTROLYTE COMPOSITE SEPARATOR, PREPARATION METHOD, AND LITHIUM BATTERY**

(30) Priority: 11.08.2023 CN 202311006763
(71) Applicant: Shanghai Energy New Materials Technology Co., Ltd., Shanghai 201399 (CN)
(72) Inventor: ZHUANG, Zhi, Shanghai 201399 (CN); QI, Jiapeng, Shanghai 201399 (CN); SU, Xiaoming, Shanghai 201399 (CN); BAO, Jinzhen, Shanghai 201399 (CN); JIA, Yuanchao, Shanghai 201399 (CN); CAI, Yuhong, Shanghai 201399 (CN); CHENG, Yue, Shanghai 201399 (CN)
(74) Representative: Lapienis, Juozas
(86) International application number: PCT/CN2024/111177
(87) International publication number: WO 2025/036304

(57) **Abstract**

The present invention relates to the technical field of lithium batteries, and in particular, to an electrolyte composite separator, a preparation method, and a lithium battery. The electrolyte composite separator comprises a base film, a solid electrolyte layer disposed on at least one side of the base film, and a resin layer disposed on at least the side of the solid electrolyte layer away from the base film. The peel strength between the solid electrolyte layer and the base film is greater than the peel strength between the solid electrolyte layer and the resin layer. When a lithium battery is prepared by using the electrolyte composite separator provided in the examples of the present invention, due to the fact that the peel strength between the resin layer and a solid electrolyte is relatively small, the resin layer can be partially integrated into the electrode material after hot pressing, so that the solid electrolyte layer can be in full contact with the electrode material, resin content in the contact interface between the solid electrolyte layer and the electrode material is reduced, and the internal resistance of the lithium battery can be reduced.

## Description

### CROSS-REFERENCE

This application claims priority to Chinese Patent Application No. 202311006763.2, titled "ELECTROLYTE COMPOSITE SEPARATOR AND PREPARATION METHOD THEREFOR, AND LITHIUM-ION BATTERY" and filed on August 11, 2023, all the contents of which are hereby incorporated by reference.

### TECHNICAL FIELD

The present invention relates to the technical field of lithium-ion batteries, and in particular to an electrolyte composite separator and a preparation method therefor, and a lithium-ion battery.

### BACKGROUND

With the increasing demand for lithium-ion batteries, consumers have made higher requirements on the performance of the lithium-ion batteries. A solid or semi-solid lithium-ion battery is expected to greatly solve the safety problem of the lithium-ion battery.

In the solid or semi-solid lithium-ion battery, the problem that a solid electrolyte is difficult to fully contact with an electrode easily is likely to occur, and a solid-liquid interface between an electrode material and an electrolytic solution is partially converted to a solid-solid interface between the electrode material and the solid electrolyte, and mutual diffusion and even reaction among components may form a vacancy charge layer and the like, such that the internal resistance of the lithium-ion battery is increased, and the cycle performance of the lithium-ion battery is deteriorated.

Currently, in order to solve the problem of interfacial bonding between a solid electrolyte layer and the electrode, a thermal adhesive layer may be introduced on the surface of the solid electrolyte layer. However, the introduction of the thermal adhesive layer increases the internal resistance of the lithium-ion battery.

### SUMMARY

In view of the above-mentioned shortcomings, the present invention provides an electrolyte composite separator and a preparation method therefor, and a lithium-ion battery so as to partially or wholly solve the problem of excessive internal resistance of a lithium-ion battery including a thermal adhesive layer in the related art.

The present invention is implemented as follows:
in a first aspect, an example of the present invention provides an electrolyte composite separator, including a base film, a solid electrolyte layer arranged on at least one side of the base film, and a resin layer at least arranged on one side of the solid electrolyte layer away from the base film. A peel strength between the solid electrolyte layer and the base film is greater than that between the solid electrolyte layer and the resin layer.

In the implementation process, the solid electrolyte layer is arranged on the base film, and the resin layer is arranged on the solid electrolyte layer, such that ionic conductivity of the electrolyte composite separator can be improved. Besides, the resin layer is arranged on the surface of the solid electrolyte layer, such that the contact between the solid electrolyte layer and an electrode is fuller and closer in the process of hot pressing. Since the peel strength between the resin layer and the solid electrolyte layer is lower, when the lithium-ion battery is prepared, the resin layer may be partially fused into an electrode material after the hot pressing, such that the electrolyte layer is in full contact with the electrode material, the resin content between contact interfaces of the electrolyte layer and the electrode material is reduced, and internal resistance of the lithium-ion battery is reduced.

With reference to the first aspect, in an alternative embodiment of the present invention, the peel strength between the solid electrolyte layer and the base film is 80-220 N/m.

In the implementation process, the peel strength between the solid electrolyte layer and the base film is 80-220 N/m, such that the stability of the electrolyte composite separator can be improved, and the falling probability of the solid electrolyte layer can be reduced.

With reference to the first aspect, in an alternative embodiment of the present invention, the peel strength between the solid electrolyte layer and the resin layer is 20-50 N/m.

In the implementation process, the peel strength between the solid electrolyte layer and the resin layer is 20-50 N/m, such that the internal resistance of the electrolyte composite separator can be reduced while the adhesion between the electrolyte composite separator and an electrode plate is ensured.

With reference to the first aspect, in an alternative embodiment of the present invention, a thickness of the solid electrolyte layer is 1-5 µm.

In the implementation process, the thickness of the solid electrolyte layer is 1-5 µm, such that the ionic conductivity of the electrolyte composite separator can be further improved.

With reference to the first aspect, in an alternative embodiment of the present invention, a thickness of the resin layer is 0.5-3 µm.

In the implementation process, the thickness of the resin layer is 0.5-3 µm, such that a transmission distance between the solid electrolyte layer and the electrode can be further reduced, and the overall internal resistance of the lithium-ion battery can be further decreased.

With reference to the first aspect, in an alternative embodiment of the present invention, the solid electrolyte layer is arranged on one side of the base film and the resin layer is arranged on the other side of the base film.

With reference to the first aspect, in an alternative embodiment of the present invention, the electrolyte composite separator includes the resin layer, the base film, the solid electrolyte layer and the resin layer that are sequentially stacked.

In the implementation process, the resin layer is directly arranged on the other side of the base film, and the electrolyte composite separator may be pasted between a positive electrode and a negative electrode of the lithium-ion battery by using the two resin layers on the surface layer of the electrolyte composite separator, such that the internal resistance of the lithium-ion battery is reduced.

With reference to the first aspect, in an alternative embodiment of the present invention, a ceramic layer is arranged between the base film and the resin layer; and/or a ceramic layer is arranged between the base film and the solid electrolyte layer, a first peel strength is present between the base film and the ceramic layer, a second peel strength is present between the ceramic layer and the solid electrolyte layer, and the peel strength between the solid electrolyte layer and the base film is a minimum value of the first peel strength and the second peel strength.

In the implementation process, the ceramic layer is arranged on one side or both sides of the base film, such that the safety of the electrolyte composite separator can be improved.

With reference to the first aspect, in an alternative embodiment of the present invention, a material forming the solid electrolyte layer includes an oxide solid electrolyte.

In the implementation process, the oxide solid electrolytes of lithium aluminum titanium phosphate, lithium lanthanum zirconium oxide, lithium lanthanum titanium oxide and the like have good structural stability, such that the ionic conductivity of the electrolyte composite separator can be further improved.

With reference to the first aspect, in an alternative embodiment of the present invention, a material forming the resin layer includes at least one of an acrylic resin and polyvinylidene fluoride.

In the implementation process, the acrylic resin, the polyvinylidene fluoride and other thermal adhesive resins can improve the interfacial bonding performance between the solid electrolyte layer and the electrode.

In a second aspect, an example of the present invention provides a preparation method for an electrolyte composite separator. The electrolyte composite separator includes a base film, a solid electrolyte layer arranged on at least one side of the base film, and a resin layer at least arranged on one side of the solid electrolyte layer away from the base film. The preparation method includes:
a step for preparing the solid electrolyte layer: obtaining a first slurry containing a solid electrolyte material and a first adhesive, and coating the first slurry on at least one side of the base film to obtain the solid electrolyte layer; and
a step for preparing the resin layer: obtaining a second slurry containing a thermal adhesive resin material and a second adhesive, and coating the second slurry on at least the other side of the solid electrolyte layer to obtain the resin layer, where the bonding strengths of the first adhesive and the second adhesive are the same, and the mass content of the first adhesive in the first slurry is higher than that of the second adhesive in the second slurry; and/or the bonding strengths of the first adhesive and the second adhesive are different, and the bonding strength of the first adhesive is higher than that of the second adhesive.

In the implementation process, since the mass content of the first adhesive in the first slurry is higher than that of the second adhesive in the second slurry, and the bonding strength of the first adhesive is higher than that of the second adhesive, the electrolyte composite separator having the characteristic that the peel strength between the base film and the solid electrolyte layer is greater than that between the solid electrolyte layer and the resin layer may be obtained after the first slurry is coated on the base film and the second slurry is coated on the surface of the solid electrolyte layer, such that the ionic conductivity of the electrolyte composite separator can be improved, and the internal resistance of the electrolyte composite separator can be further reduced.

With reference to the second aspect, in an alternative embodiment of the present invention, the first adhesive is selected from two-component polyurethane glue.

In the implementation process, the two-component polyurethane glue has a higher bonding strength, such that the structural stability of the electrolyte composite separator can be improved.

With reference to the second aspect, in an alternative embodiment of the present invention, the second adhesive is selected from an acrylic adhesive.

In the implementation process, the acrylic adhesive has a lower peel strength, such that the internal resistance of the lithium-ion battery can be reduced.

With reference to the second aspect, in an alternative embodiment of the present invention, in the step for preparing the resin layer, the second slurry is coated on the other side of the solid electrolyte layer in a roll coating or spray coating manner.

In the implementation process, the second slurry is coated on the other side of the solid electrolyte layer in the roll coating or spray coating manner, such that a relatively loose thermal adhesive layer may be formed on the surface of the solid electrolyte layer, and the internal resistance of the lithium-ion battery can be further reduced while the bonding strength is hardly reduced.

In a third aspect, an example of the present invention provides a lithium-ion battery, including the electrolyte composite separator provided in the first aspect and an electrode plate attached to the electrolyte composite separator, where a part of the thermal adhesive resin in the electrolyte composite separator is fused into the electrode plate.

In the implementation process, the electrolyte composite separator provided by the first aspect has a lower internal resistance while having a higher ionic conductivity, such that the electrical performance of the lithium-ion battery can be improved. Besides, the resin layer is arranged on the surface of the solid electrolyte layer of the electrolyte composite separator, such that the contact between the solid electrolyte layer and the electrode is closer in the process of the hot pressing, the transmission distance between the electrolyte and the electrode interface is reduced, and the internal resistance of the lithium-ion battery is reduced. Meanwhile, since the peel strength between the resin layer and the solid electrolyte layer is lower, the resin layer may be fused into the electrode material after the hot pressing, and the internal resistance of the lithium-ion battery can be further reduced.

### BRIEF DESCRIPTION OF THE DRAWINGS

In order to more clearly illustrate the embodiments of the present invention or the technical solutions in the prior art, the following will briefly introduce the drawings that need to be used in the description of the embodiments or the prior art.
FIG. 1 is a schematic cross-sectional view of a first electrolyte composite separator provided by an example of the present invention;
FIG. 2 is a schematic view of a process for preparing an electrolyte composite separator provided by an example of the present invention;
FIG. 3 is a schematic cross-sectional view of a second electrolyte composite separator provided by an example of the present invention;
FIG. 4 is a schematic cross-sectional view of a third electrolyte composite separator provided by an example of the present invention;
FIG. 5 is a schematic cross-sectional view of a fourth electrolyte composite separator provided by an example of the present invention;
FIG. 6 is a schematic cross-sectional view of a fifth electrolyte composite separator provided by an example of the present invention;
FIG. 7 is a schematic cross-sectional view of a sixth electrolyte composite separator provided by an example of the present invention; and
FIG. 8 is a schematic cross-sectional view of a lithium-ion battery provided by an example of the present invention.

Reference numerals: 100, lithium-ion battery; 1, electrolyte composite separator; 11, base film; 12, solid electrolyte layer; 13, resin layer; 14, ceramic layer; 2, positive electrode; and 3, negative electrode.

### DETAILED DESCRIPTION OF THE EMBODIMENTS

Embodiments of the present invention will be described in detail below with reference to embodiments, but those skilled in the art will understand that the following embodiments are only used to illustrate the present invention and should not be regarded as limiting the scope of the present invention. If no specific conditions are specified in the embodiments, the embodiments will be conducted according to conventional conditions or the conditions recommended by the manufacturer. All of the used reagents or instruments which are not specified with manufacturers are conventional commercially-available products.

In a solid or semi-solid lithium-ion battery, a solid-liquid interface between an electrode material and an electrolytic solution is partially converted to a solid-solid interface between the electrode material and a solid electrolyte, the problem that the solid electrolyte is difficult to fully contact with an electrode easily occurs, and mutual diffusion and even reaction among components may form a vacancy charge layer and the like, such that internal resistance of the lithium-ion battery is increased, and the cycle performance of the lithium-ion battery is deteriorated.

In order to solve the problem of interfacial bonding between a solid electrolyte layer and the electrode, a thermal adhesive resin may be introduced on the surface of the solid electrolyte layer, and the close bonding between the solid electrolyte layer and the electrode is achieved by using the thermal adhesiveness of the thermal adhesive resin.

However, due to an improper peel strength, cohesion and thickness of the adhesive resin introduced, the internal resistance of the lithium-ion battery is increased.

On this basis, an example of the present invention provides an electrolyte composite separator and a preparation method therefor, thereby reducing the internal resistance of the lithium-ion battery to some extent. In order to make the objectives, technical solutions and advantages of the embodiments of the present invention clearer, the technical solutions in the embodiments of the present invention will be clearly and completely described below in conjunction with the accompanying drawings in the embodiments of the present invention.

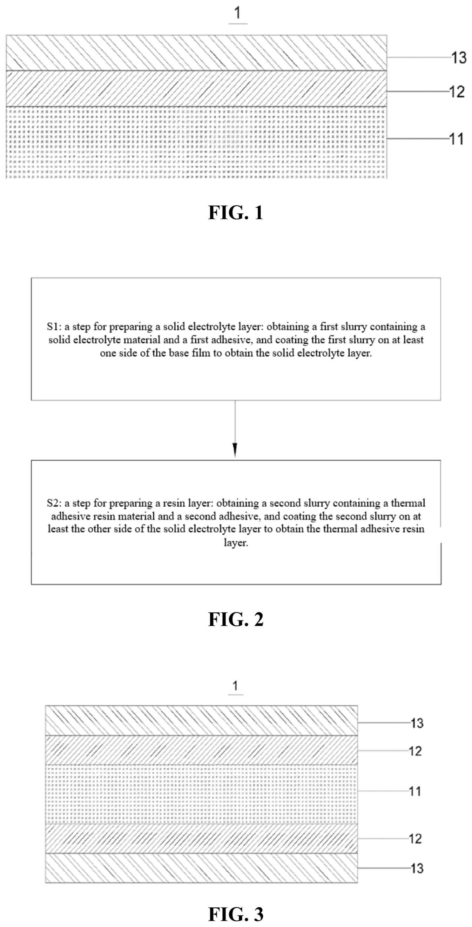

Referring to FIG. 1, an example of the present invention provides an electrolyte composite separator 1, including a base film 11, a solid electrolyte layer 12 arranged on at least one side of the base film 11, and a resin layer 13 at least arranged on one side of the solid electrolyte layer 12 away from the base film 11.

The resin layer 13 refers to a thermal adhesive resin which becomes adhesive and has an adhesive function when being heated.

Referring to FIG. 2, a preparation method for the electrolyte composite separator 1 provided by an example of the present invention includes:
S1, a step for preparing the solid electrolyte layer 12:
a first slurry containing a solid electrolyte material and a first adhesive is obtained, and the first slurry is coated on at least one side of the base film 11 to obtain the solid electrolyte layer 12.

The present invention is not limited to that the first slurry is coated on one side or both sides of the base film 11. In one possible embodiment, referring to FIG. 1 continuously, the first slurry may be coated on one side of the base film 11 to obtain the solid electrolyte layer 12.

Alternatively, in another possible embodiment, referring to FIG. 3, the first slurry may be coated on both sides of the base film 11, and both sides of the base film 11 are coated with the solid electrolyte layer 12.

Further, the present invention does not limit the specific material of the base film 11, and related personnel may make corresponding selections according to the needs.

In some possible embodiments, the material of the base film 11 may be selected from one or more of polyethylene, polypropylene, polyvinylidene fluoride, and polyimide.

Further, the present invention does not limit the specific type of the solid electrolyte material. In one possible embodiment, the solid electrolyte layer material includes an oxide solid electrolyte.

The oxide solid electrolyte has good structural stability, and can further improve the stability of the electrolyte composite separator 1.

For example, the oxide solid electrolyte may be selected from at least one of lithium aluminum titanium phosphate, lithium lanthanum zirconium oxide, and lithium lanthanum titanium oxide.

Alternatively, in some other possible embodiments, the solid electrolyte material may be selected from at least one of a sulfide-based solid electrolyte, LiPON, and Li3N. Alternatively, the solid electrolyte material may be selected from at least one of an organic polymer solid electrolyte, such as a PEO-based solid electrolyte, a PAN-based solid electrolyte, a PMMA-based solid electrolyte, a PVDF-based solid electrolyte, a PEO-PAN-based solid electrolyte, a PEO-PMMA-based solid electrolyte, a PEO-PVDF-based solid electrolyte, a PMMA-PVDF-based solid electrolyte, a PMMA-PAN-based solid electrolyte, a PAN-PVDF-based solid electrolyte, a PEO-PAN-PMMA-based solid electrolyte, a PEO-PVDF-PMMA-based solid electrolyte, a PEO-PAN-PVDF-based solid electrolyte, and a PAN-PMMA-PVDF-based solid electrolyte.

Further, the present invention does not limit the specific type of the first adhesive. In one possible embodiment, the first adhesive is selected from two-component polyurethane glue.

The two-component polyurethane glue has a higher bonding strength, and can improve the peel strength between the base film 11 and the resin layer 13 and the stability of the electrolyte composite separator 1.

Alternatively, in some other possible embodiments, the first adhesive may be selected from one or more of styrene butadiene rubber, a water-soluble unsaturated resin SR-1B, sodium alginate, polyurethane, polyacrylic acid, polyethylacrylate, polymethacrylic acid, sodium polyacrylate, sodium polycarboxymethyl cellulose, acrylamide, polyvinyl alcohol, and carboxymethyl chitosan.

Further, the first slurry may further include a dispersing agent to improve the distribution uniformity of a solid electrolyte coating.

The present invention does not limit the specific type of the dispersing agent, and related personnel may make corresponding selections according to the needs.

In some possible embodiments, the dispersing agent may be selected from one or more of deionized water, methanol, ethanol, and propanol.

Further, the first slurry may further include a thickening agent, such that the viscosity of the first slurry can be adjusted, and the coating uniformity can be improved.

The present invention does not limit the specific type of the thickening agent, and related personnel may make corresponding selections according to the needs.

In some possible embodiments, the thickening agent may be selected from at least one of carboxymethyl cellulose and a polyether-modified silicone polymer.

Further, the first slurry may further include a leveling aid. The present invention does not limit the specific type of the leveling aid. In some possible embodiments, the leveling aid may be selected from one or more of a polysiloxane leveling agent, a polyester leveling agent, a polyurethane leveling agent, and a polyacrylate leveling agent.

Further, the present invention does not limit the content of the first adhesive in the first slurry, and related personnel may adjust the content of the first adhesive according to the needs. For example, the content of the first adhesive may be adjusted to adjust the peel strength between the base film 11 and the solid electrolyte layer 12.

Further, the present invention does not limit the specific coating manner, and related personnel may make corresponding selections according to the needs.

In one possible embodiment, a roll coating manner may be used to coat the first slurry on the surface of the base film 11. The roll coating manner can improve the stability of the coating structure of the solid electrolyte layer 12.

Alternatively, in some other possible embodiments, a spray coating, blade coating, or slit coating manner may be used to coat the first slurry on the surface of the base film 11.

Further, the present invention does not limit the thickness of the solid electrolyte layer 12 after the coating, and related personnel may make corresponding selections according to the needs.

In some possible embodiments, the thickness of the solid electrolyte layer 12 may be 1-5 µm.

For example, the thickness of the solid electrolyte layer 12 may be one or in a range between any two of 1 µm, 2 µm, 3 µm, 4 µm, and 5 µm.

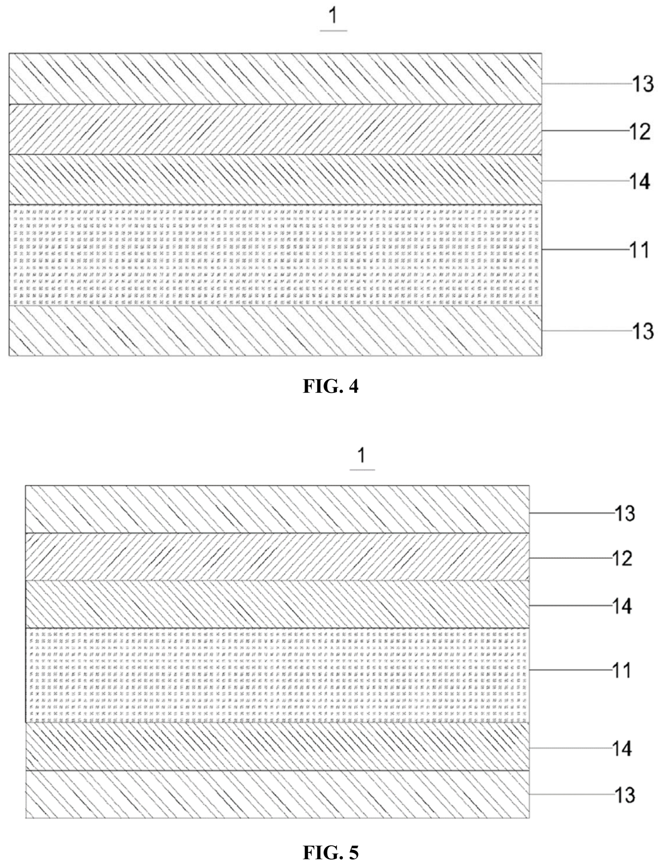

In one possible embodiment, referring to FIG. 4, one side of the base film 11 may be coated with a ceramic slurry to form a ceramic layer 14, and then the first slurry is coated on the ceramic layer 14 to form the solid electrolyte layer 12.

A material forming the ceramic layer 14 may be selected from at least one of aluminum oxide, magnesium oxide, magnesium hydroxide, boehmite, and calcium carbonate.

For example, the material forming the ceramic layer 14 is aluminum oxide.

In order not to affect the peel strength between the base film 11 and the solid electrolyte layer 12, in one possible embodiment, the content or type of the adhesive in the ceramic slurry may be the same as that of the first adhesive.

Further, referring to FIG. 5, both sides of the base film 11 may be coated with the ceramic slurry to respectively form the ceramic layers 14 on both sides of the base film 11.

Further, referring to FIG. 2 continuously, a preparation method for the electrolyte composite separator 1 provided by an example of the present invention further includes:
S2, a step for preparing the resin layer 13:
a second slurry containing a thermal adhesive resin material and a second adhesive is obtained, and the second slurry is coated on at least the other side of the solid electrolyte layer 12 to obtain the resin layer 13.

The present invention does not limit the specific type of the thermal adhesive resin material, and related personnel may make corresponding selections according to the needs.

In some possible embodiments, a material forming the resin layer includes at least one of an acrylic resin and polyvinylidene fluoride.

Further, the copolymer polyvinylidene fluoride having a low molecular weight may be selected, such that a greater thermal adhesive strength can be maintained under the condition of reducing the addition amount.

Further, the present invention does not limit the specific type of the second adhesive. In one possible embodiment, the second adhesive is selected from an acrylic adhesive.

Further, the second slurry may further include a dispersing agent to improve the distribution uniformity of a thermal adhesive coating.

The present invention does not limit the specific type of the dispersing agent. In some possible embodiments, the dispersing agent may be selected from one or more of deionized water, methanol, ethanol, and propanol.

Further, the second slurry may further include a thickening agent, such that the viscosity of the second slurry can be adjusted, and the coating uniformity can be improved.

The present invention does not limit the specific type of the thickening agent. In some possible embodiments, the thickening agent may be selected from at least one of carboxymethyl cellulose and a polyether-modified silicone polymer.

Further, the present invention does not limit the content of the second adhesive in the second slurry, and related personnel may adjust the content of the second adhesive according to the needs.

For example, the content of the second adhesive may be adjusted to adjust the peel strength between the solid electrolyte layer 12 and the resin layer 13. Alternatively, the second adhesive with a lower bonding strength may be used to reduce the peel strength between the solid electrolyte layer 12 and the resin layer 13.

The present invention does not limit whether the types of the first adhesive and the second adhesive are the same, and related personnel may make corresponding adjustments according to the needs.

In one possible embodiment, the first adhesive and the second adhesive are selected from the same adhesive. In order to improve the peel strength between the base film 11 and the solid electrolyte layer 12, the content of the adhesive in the first slurry can be improved. In order to reduce the peel strength between the solid electrolyte layer 12 and the resin layer 13, the content of the adhesive in the second slurry can be reduced.

Alternatively, in another possible embodiment, adhesives with different bonding strengths are selected for the first adhesive and the second adhesive. In order to improve the peel strength between the base film 11 and the solid electrolyte layer 12, the adhesive with the higher bonding strength may be used as the first adhesive. In order to reduce the peel strength between the solid electrolyte layer 12 and the resin layer 13, the adhesive with the lower bonding strength may be used as the second adhesive.

Further, the present invention does not limit the specific coating manner of the resin layer 13, and related personnel may make corresponding selections according to the needs.

In one possible example, a spray coating manner may be used to coat the second slurry on the surface of the corresponding film layer. A loose resin layer 13 may be formed by the spray coating manner.

Alternatively, in some other possible embodiments, a roll coating, blade coating, or slit coating manner may be used to coat the second slurry on the surface of the corresponding film layer.

For example, the spray coating manner may be used to coat the second slurry on the surface of the solid electrolyte layer 12.

For example, the spray coating manner may be used to coat the second slurry on the surface of the base film 11.

For example, the spray coating manner may be used to coat the second slurry on the surface of the ceramic layer 14.

In one possible embodiment, referring to FIG. 3 continuously, the first slurry may be coated on both sides of the base film 11 to form two solid electrolyte layers 12, and then the second slurry is coated on the surface of each solid electrolyte layer 12 to form two resin layers 13.

In one possible embodiment, referring to FIG. 4 continuously, one side of the base film 11 may be coated with the ceramic slurry to form the ceramic layer 14. Then the first slurry is coated on the surface of the ceramic layer 14 to form one solid electrolyte layer 12. Then the second slurry is spray-coated on the surface of the solid electrolyte layer 12 to form the resin layer 13. The second slurry is coated on the other side of the base film 11 to form the resin layer 13.

In one possible embodiment, one side of the base film 11 may be coated with the ceramic slurry to form the ceramic layer 14, and then the second slurry is coated on the ceramic layer 14 to form the resin layer 13.

For example, referring to FIG. 5, both sides of the base film 11 may be coated with the ceramic slurry to form the ceramic layers 14 on both sides of the base film 11. Then the first slurry is coated on the surface of the ceramic layer 14 on one side to form one solid electrolyte layer 12. Then the second slurry is spray-coated on the surface of the solid electrolyte layer 12 to form the resin layer 13. The second slurry is coated on the surface of the ceramic layer 14 on the other side to form the resin layer 13.

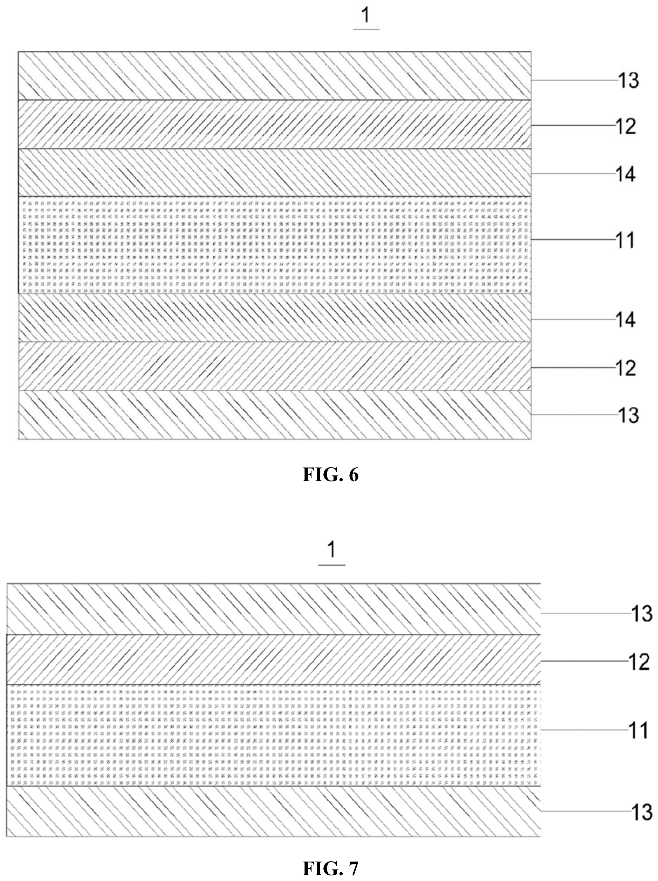

For example, referring to FIG. 6, both sides of the base film 11 may be coated with the ceramic slurry to form the ceramic layers 14 on both sides of the base film 11. Then the first slurry is coated on the surfaces of both sides of the ceramic layer 14 respectively to form the solid electrolyte layer 12. Then the second slurry is spray-coated on the surface of each solid electrolyte layer 12 to form the resin layer 13.

In one possible embodiment, referring to FIG. 7, the first slurry may be coated on one side of the base film 11 to form one solid electrolyte layer 12, and then the second slurry is coated on the other side of the base film 11 and one side of the solid electrolyte layer 12 away from the base film 11 to form the resin layer 13.

Further, the present invention does not limit the thickness of the resin layer 13, and related personnel may make corresponding selections according to the needs.

In some possible embodiments, the thickness of the resin layer 13 may be 0.5-3 µm.

For example, the thickness of the resin layer 13 may be one or in a range between any two of 0.5 µm, 1 µm, 1.5 µm, 2 µm, 2.5 µm, and 3 µm.

Further, the present invention does not limit the thickness of the ceramic layer 14, and related personnel may make corresponding selections according to the needs.

In some possible embodiments, the thickness of the ceramic layer 14 may be one or in a range between any two of 1 µm, 1.5 µm, 2 µm, 2.5 µm, 3 µm, 3.5 µm, 4 µm, 4.5 µm, and 5 µm.

An example of the present invention further provides a lithium-ion battery 100, including the electrolyte composite separator 1 and an electrode plate attached to the electrolyte composite separator 1, where a part of the thermal adhesive resin in the electrolyte composite separator 1 is fused into the electrode plate.

The present invention does not limit the specific type of the lithium-ion battery 100, and related personnel may make corresponding adjustments according to the needs.

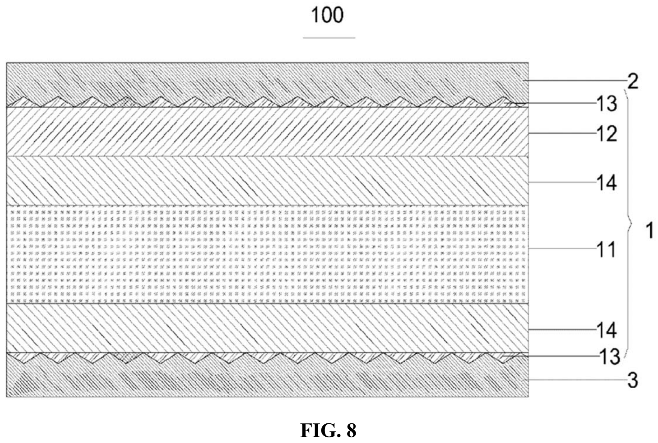

In one possible embodiment, referring to FIG. 8, the lithium-ion battery 100 includes a positive electrode 2, a negative electrode 3, and the electrolyte composite separator 1 positioned between the positive electrode 2 and the negative electrode 3. A part of the thermal adhesive resin in the resin layer 13 of the electrolyte composite separator 1 is fused into the electrode plate.

The electrolyte composite separator 1 of the present invention is further described in detail below with reference to the embodiments.

### Embodiment 1

Embodiment 1 provides an electrolyte composite separator 1. The structure of the electrolyte composite separator 1 is shown in FIG. 1. The electrolyte composite separator includes a base film 11, a solid electrolyte layer 12 and a resin layer 13 that are sequentially stacked. A preparation method therefor is as follows:

### (1) Preparation of raw materials

According to a mass ratio of 40:50:5:1:0.02:0.003, lithium aluminum titanium phosphate, water, two-component polyurethane glue, a thickening agent (CMC1500), a dispersing agent (a sodium acrylate salt), and a leveling aid (polyether siloxane) were mixed to prepare a first slurry.

According to a mass ratio of 80:5:1:1:0.02, water, low-molecular-weight copolymeric PVDF, an acrylic adhesive, the thickening agent (CMC1500), and the dispersing agent (the sodium acrylate salt) were mixed to prepare a second slurry.

The base film 11 was selected from ND9 prepared by Shanghai Energy New Material Technology Co., Ltd., and was about 9 µm via a wet process.

### (2) Coating

The first slurry was coated on one side of the base film 11 by roll coating to a thickness of about 3 µm, and dried to obtain the solid electrolyte layer 12.

The second slurry was coated on the solid electrolyte layer 12 by spray coating to a thickness of about 2 µm, and dried to obtain the resin layer 13.

### Embodiment 2

Embodiment 2 provides an electrolyte composite separator 1. The structure of the electrolyte composite separator 1 is shown in FIG. 3. The electrolyte composite separator includes a resin layer 13, a solid electrolyte layer 12, a base film 11, a solid electrolyte layer 12 and a resin layer 13 that are sequentially stacked.

A preparation method therefor is different from Embodiment 1 in that: in step (2), the first slurry was coated on both sides of the base film 11 by roll coating to a thickness of about 3 µm of the both sides, and dried to obtain the solid electrolyte layer 12 located on both sides of the base film 11.

Then the second slurry was coated on each solid electrolyte layer 12 by spray coating to a thickness of about 2 µm of each coating, and dried to obtain the resin layer 13.

### Embodiment 3

Embodiment 3 provides an electrolyte composite separator 1. The structure of the electrolyte composite separator 1 is shown in FIG. 4. The electrolyte composite separator includes a resin layer 13, a base film 11, a ceramic layer 14, a solid electrolyte layer 12 and a resin layer 13 that are sequentially stacked. The base film 11 is a separator of about 5-22 µm by a wet-process coating.

A preparation method therefor is different from Embodiment 1 in that:
in step (1), the preparation method further includes preparation of a third slurry: according to a mass ratio of 40:45:5:1:0.02:0.003, aluminum oxide, water, two-component polyurethane glue, the thickening agent (CMC1500), the dispersing agent (the sodium acrylate salt), and the leveling aid (polyether siloxane) were mixed to prepare the third slurry.

In step (2), the third slurry was coated on one side of the base film 11 by roll coating to a thickness of about 3 µm, and dried to obtain the ceramic layer 14 located on one side of the base film 11.

Then the first slurry was coated on the ceramic layer 14 by roll coating to a thickness of about 3 µm, and dried to obtain the solid electrolyte layer 12 located on the ceramic layer 14.

Finally, the second slurry was spray-coated on the solid electrolyte layer 12 and the other side of the base film 11 respectively to a thickness of about 2 µm, and dried to obtain the resin layer 13 respectively located on the solid electrolyte layer 12 and the base film 11.

### Embodiment 4

Embodiment 4 provides an electrolyte composite separator 1, and is different from Embodiment 1 in that: in step (1), the content of the second adhesive in the second slurry was higher, and the second slurry was obtained by mixing water, the low-molecular-weight copolymeric PVDF, the acrylic adhesive, the thickening agent (CMC1500), and the dispersing agent (the sodium acrylate salt) according to a mass ratio of 80:5:3:1:0.02.

### Embodiment 5

Embodiment 5 provides an electrolyte composite separator 1, and is different from Embodiment 1 in that:
in step (2), the second slurry was coated on the solid electrolyte layer 12 by spray coating to a thickness of about 5 µm, and dried to obtain the resin layer 13.

### Comparative Example 1

Comparative Example 1 provides an electrolyte composite separator 1, and is different from Embodiment 3 in that:
in step (1), according to a mass ratio of 80:5:1:1:0.02, water, the low-molecular-weight copolymeric PVDF, the two-component polyurethane glue, the thickening agent (CMC1500), and the dispersing agent (the sodium acrylate salt) were mixed to prepare a second slurry.

### Test Example

Each of the film layers of Embodiments 1-3 and Comparative Example 1 was subjected to tests of film layer thickness, air permeability, peel strength, internal resistance, and ionic conductivity, and the test results were shown in Table 1. In Embodiment 3 and Comparative Example 1, the peel strength between the base film and the aluminum oxide is a first peel strength, the peel strength between the aluminum oxide and the solid electrolyte layer is a second peel strength, and the peel strength between the base film and the solid electrolyte layer is a minimum value of the first peel strength and the second peel strength. In Embodiment 3, the first peel strength between the base film and the aluminum oxide is 200 N/m, the second peel strength between the aluminum oxide and the solid electrolyte layer is 200 N/m, and the peel strength between the base film and the solid electrolyte layer is 200 N/m.

**Table 1**

| **Groups** | | Thickness (µm) | Air Permeability (s/100cc) | Peel Strength between Base Film and Solid Electrolyte Layer (N/m) | Peel Strength between Solid Electrolyte Layer and Resin Layer (N/m) | Internal Resistance (Ω×cm²) | Ionic Conductivity (S/cm) |
|---|---|---|---|---|---|---|---|
| **Embodiment** 1 | Base film | **9.6** | **155** | **-** | **-** | **1.144** | **0.84** |
| | Base film+solid electrolyte layer | **12.5** | **189** | **100** | **-** | **1.4334** | **0.872** |
| | Base film+solid electrolyte layer+resin layer | **14.6** | **205** | **100** | **30** | **1.5188** | **0.9612** |
| **Embodiment** 2 | Base film | **9.6** | **157** | **-** | **-** | **1.144** | **0.84** |
| | Base film+double-sided solid electrolyte layer | **15.5** | **199** | **150** | **-** | **1.333** | **1.162** |
| | Base film+double-sided solid electrolyte layer+double-sided resin layer | **19.6** | **215** | **150** | **27** | **1.598** | **1.2265** |
| **Embodiment** 3 | Base film | **9.3** | **48** | **-** | **-** | **0.4911** | **1.8932** |
| | Base film+aluminum oxide | **12.1** | **70** | **200** | **-** | **0.7138** | **1.695** |
| | Base film+aluminum oxide+solid electrolyte layer | **15** | **85** | **200** | **-** | **0.7675** | **1.9545** |
| | Base film+ aluminum oxide+solid electrolyte layer+double-sided resin layer | **20** | **90** | **200** | **30** | **0.9211** | **2.1713** |
| **Embodiment** 4 | Base film+solid electrolyte layer+resin layer | **14.6** | **295** | **150** | > 150 | **2.1111** | **0.6911** |
| **Embodiment** 5 | Base film+solid electrolyte layer+resin layer | **17.1** | **195** | **150** | **30** | **1.6188** | **1.0563** |
| **Comparative Example 1** | Base film+ aluminum oxide+solid electrolyte layer+double-sided resin layer | **18** | **150** | **220** | **220** | **1.4111** | **1.2756** |

Result analysis: by combining Embodiment 3 and Comparative Example 1, it can be seen that by adjusting the type of the adhesive to enable the adhesiveness of the first adhesive to be higher than that of the second adhesive, the peel strength between the resin layer 13 and the solid electrolyte layer 12 is smaller than that between the solid electrolyte layer 12 and the base film 11, such that the electrolyte composite separator 1 has lower air permeability, lower internal resistance, and higher ionic conductivity.

By combining Embodiments 1 and 2, it can be seen that the change in the ionic conductivity of the separator is larger before and after the preparation of the resin layer 13. It indicated that through the preparation method provided by an example of the present invention, the resin layer 13 is prepared on the surface of the solid electrolyte layer 12, so that the ionic conductivity can be further improved.

By combining Embodiments 1 and 4, it can be seen that compared with the content of the first adhesive, the content of the second adhesive may be reduced to enable the peel strength between the resin layer 13 and the solid electrolyte layer 12 to be smaller than that between the solid electrolyte layer 12 and the base film 11, such that electrolyte composite separator 1 has lower air permeability, lower internal resistance, and higher ionic conductivity.

By combining Embodiments 1 and 5, it can be seen that through the preparation method provided by an example of the present invention, the resin layer 13 having a thickness of 0.5-3 µm is prepared on the surface of the solid electrolyte layer 12, so that the internal resistance can be further reduced.

The foregoing descriptions are merely preferred embodiments of the present invention, and are not intended to limit the present invention. For a person skilled in the art, various modifications and changes may be made to the present invention. Any modifications, equivalent replacements, improvements, and the like made within the spirit and principle of the present invention shall fall within the protection scope of the present invention.

## Claims

1. An electrolyte composite separator, **characterized by** comprising a base film, a solid electrolyte layer arranged on at least one side of the base film, and a resin layer at least arranged on one side of the solid electrolyte layer away from the base film, wherein a peel strength between the solid electrolyte layer and the base film is greater than that between the solid electrolyte layer and the resin layer.

2. The electrolyte composite separator according to claim 1, wherein the peel strength between the solid electrolyte layer and the base film is 80-220 N/m.

3. The electrolyte composite separator according to claim 1 or 2, wherein the peel strength between the solid electrolyte layer and the resin layer is 20-50 N/m.

4. The electrolyte composite separator according to claim 1, wherein a thickness of the solid electrolyte layer is 1-5 µm.

5. The electrolyte composite separator according to claim 1, wherein a thickness of the resin layer is 0.5-3 µm.

6. The electrolyte composite separator according to claim 1, wherein the electrolyte composite separator comprises the resin layer, the base film, the solid electrolyte layer and the resin layer that are sequentially stacked.

7. The electrolyte composite separator according to claim 1, wherein one side of the base film is provided with the solid electrolyte layer, and the other side of the base film is provided with the resin layer.

8. The electrolyte composite separator according to claim 7, wherein a ceramic layer is arranged between the base film and the resin layer;
a ceramic layer is arranged between the base film and the solid electrolyte layer, a first peel strength is present between the base film and the ceramic layer, a second peel strength is present between the ceramic layer and the solid electrolyte layer, and the peel strength between the solid electrolyte layer and the base film is a minimum value of the first peel strength and the second peel strength; or
a ceramic layer is arranged between the base film and the solid electrolyte layer, a material forming the ceramic layer is selected from at least one of aluminum oxide, magnesium oxide, magnesium hydroxide, boehmite, and calcium carbonate, a first peel strength is present between the base film and the ceramic layer, a second peel strength is present between the ceramic layer and the solid electrolyte layer, and the peel strength between the solid electrolyte layer and the base film is a minimum value of the first peel strength and the second peel strength.

9. The electrolyte composite separator according to claim 1, wherein a material forming the solid electrolyte layer comprises an oxide solid electrolyte; or
a material forming the solid electrolyte layer comprises an oxide solid electrolyte, and the oxide solid electrolyte is selected from at least one of lithium aluminum titanium phosphate, lithium lanthanum zirconium oxide, and lithium lanthanum titanium oxide.

10. The electrolyte composite separator according to claim 1, wherein a material forming the resin layer comprises at least one of an acrylic resin and polyvinylidene fluoride.

11. A preparation method for an electrolyte composite separator, **characterized in that** the electrolyte composite separator comprises a base film, a solid electrolyte layer arranged on at least one side of the base film, and a resin layer at least arranged on one side of the solid electrolyte layer away from the base film; and the preparation method comprises:
a step for preparing the solid electrolyte layer: obtaining a first slurry containing a solid electrolyte material and a first adhesive, and coating the first slurry on at least one side of the base film to obtain the solid electrolyte layer; and
a step for preparing the resin layer: obtaining a second slurry containing a thermal adhesive resin material and a second adhesive, and coating the second slurry on at least the other side of the solid electrolyte layer to obtain the resin layer, wherein
the bonding strengths of the first adhesive and the second adhesive are the same, and the mass content of the first adhesive in the first slurry is higher than that of the second adhesive in the second slurry; and/or the bonding strength of the first adhesive is higher than that of the second adhesive.

12. The preparation method according to claim 11, wherein the first adhesive is selected from two-component polyurethane glue.

13. The preparation method according to claim 11, wherein the second adhesive is selected from an acrylic adhesive.

14. The preparation method according to claim 11, wherein in the step for preparing the resin layer, the second slurry is coated on the other side of the solid electrolyte layer in a roll coating or spray coating manner.

15. A lithium-ion battery, comprising the electrolyte composite separator according to any one of claims 1-10 and an electrode plate attached to the electrolyte composite separator, wherein a part of the thermal adhesive resin in the electrolyte composite separator is fused into the electrode plate.
